# DEMANDE DE BREVET EUROPEEN

(11) **EP 2 223 586 A1**
(43) Date de publication de la demande: **01.09.2010**
(21) Numéro de dépôt: 10366001.5
(22) Date de dépôt: 23.02.2010
(51) Int. Cl.: A01C 21/00, C05F 11/08

(54) **Utilisation d'agents azotonutritionnels (ANN) pour la fertilisation des grandes cultures non-légumineuses**

(30) Priorité: 25.02.2009 FR 0900867
(71) Demandeur: Claude, Pierre-Philippe, 54000 Nancy (FR)
(72) Inventeur: Claude, Pierre-Philippe, 54000 Nancy (FR)

(57) **Abrégé**

Utilisation d'agents azoto - nutritionnels (ANN) par application foliaire pour la fertilisation de grandes cultures agronomiques non - légumineuses. L'efficacité relative des ANN fut limitée du fait qu'ils ne pouvaient intervenir qu'en tout fin du cycle végétatif au stade du remplissage accéléré du grain, stade au quel le potentiel de rendement de la culture est à toutes fins pratiques déterminé et peu influençable par ce genre de traitement. Or, il s'avère que la présence de bactéries favorisant la croissance des plantes (BFCP) particulièrement bien adaptées à la vie dans les sols en proximité des semences permet d'accroître l'utilité de ces ANN en les rendant conséquents lorsque appliqués au cours de la phase végétative, période relativement vaste normalement peu adaptée à ce genre de traitement azoto - nutritionnel. La facilité d'utilisation des ANN est ainsi grandement améliorée, ce qui permet d'en augmenter l'incidence de réussite.

## Description

### DOMAINE TECHNIQUE DE L'INVENTION

L'invention concerne la fertilisation raisonnée des grandes cultures non - légumineuses et la valorisation in situ des résidus de culture au sol, notamment au moyen d'inocula de bactéries favorisant la croissance des plantes (BFCP) et d'agents azoto - nutritionnels (ANN). L'invention est donc du domaine des matières fertilisantes et des bio - industries destinées à l'agriculture.

### ÉTAT DE LA TECHNIQUE

En présence de résidus de culture au sol la fertilisation raisonnée des grandes cultures non - légumineuses est problématique du fait de la suractivité, voire la sur - compétitivité de certaines bactéries du sol, notamment les BFCP particulièrement bien adaptées à la vie dans les sols. Bien que les ANN eurent pu dans le passé contribuer à résoudre cette problématique, leurs modes d'utilisations trop restrictifs et mal positionnés les l'empêcha.

### Valorisation des résidus de culture au sol (RCsol)

Les résidus de culture pailleux laissés au sol par les céréales d'hivers et le maïs sont des amendements de sols par excellence (Singh et al. 2004). Une fois enfouis, avantageusement sur 8-12 cm de profondeur, ils contribuent à augmenter le stock de matière organique et à la conservation des sols. Cependant, du fait de leur rapport C / N plutôt élevé, généralement bien au-delà de 40, leurs utilisations comme substrats par la microflore bactérienne et fongique du sol provoque aussi une forte immobilisation de l'azote minéral autrement disponible aux racines de la culture (Cheshire et al. 1999). En effet, du fait de leurs plus grandes compétitivité pour l'azote minéral disponible (Jingguo et Bakken 1997 ; Jackson et al. 1989 ; Hodge et al. 2000), la présence des résidus de culture, leurs procurera à court et moyen termes un net avantage et provoquera l'immobilisation de cet azote au dépends de l'alimentation de la plante.

L'enfouissement de résidus de culture pailleux au sol doit donc être généralement accompagné d'une surdose d'azote minéral fertilisant capable de compenser à court terme cette indisponibilité de l'azote minéral immobilisé par la microflore bactérienne. Or, ce recours systématique à ce type de surdoses d'azote est aujourd'hui remis en question étant donné l'augmentation des coûts associés aux énergies fossiles nécessaires à la fabrication des engrais azotés et phosphatés.

### Fertilisation raisonnée

La fertilisation raisonnée permet d'améliorer, par rationnement des doses d'engrais azotés et phosphatés, les bilans massiques et énergétiques des productions agronomiques. Pour les grandes cultures d'hiver (semées à l'automne) ce rationnement de l'azote fertilisant est généralement le fait d'un pilotage intra - saisonnier des apports d'azote (Flowers et al. 2004, Claude et Fillion 2004). Pour les grandes cultures d'été (semées au printemps) ce rationnement est plus facilement mis en oeuvre via l'utilisation d'EOM (engrais organo-minéraux) pour le démarrage (Claude et Giroux 2006).

Dans un contexte de fertilisation raisonnée, l'enfouissement de résidus de culture pailleux et l'apport d'une surdose d'engrais azote qu'il suppose sont d'autant plus problématiques du fait d'un rationnement de l'azote disponible tant aux racines qu'aux bactéries du sol. Pire, l'inoculation - BFCP (bactéries favorisant la croissance des plantes) compétentes et adaptées à la vie dans les sols (Claude et Fillion 2004, FR 01 15542) les rhizosphères et/ou les résidus de cultures peut s'avérer contre-productive vu la sur - compétitivité desdites BFCP pour ledit azote disponible (Jingguo et Bakken 1997 ; Jackson et al. 1989 ; Hodge et al. 2000). En effet, si ces résidus de culture sont bactérisés au moyen de BFCP véritablement efficaces *in situ*, celles-ci seront d'autant plus compétitives à l'égard de la culture non - *Leguminosea.* Il est effectivement reconnue que c'est le niveau de « compétence édaphique » (*fitness in soil* ; Mirleau *et al*. 2000), qui limite l'efficacité des BFCP une fois réintroduites dans les sols. En effet, ces deux populations, plantes et BFCP, doivent maintenant co-habiter dans le cadre d'un même système de production agricole.

L'agronome doit donc chercher à rationner les apports N et de P destinés à l'alimentation de la plante afin d'éviter les surdoses d'engrais préjudiciables à l'environnement, tout en tentant d'éviter une trop grande concurrence entre les bactéries du sol, voire des BFCP réintroduites et la plante pour cet azote et ce phosphore. Paradoxalement, c'est donc en situation de fertilisation raisonnée, situation parfois nécessaire à la mise en évidence des bienfaits agronomiques de telles valorisations *in situ* des résidus de culture pailleux au sol, que les BFCP réintroduites dans les résidusphères peuvent devenir potentiellement contre-productives.

### Agents azoto-nutritionnel (ANN)

Les ANN sont une classe de biostimulant expressément capables de favoriser l'entrée de l'azote dans le cycle naturel de la synthèse des protéines chez la plante. En agronomie, les ANN peuvent être appliqués soit par voie foliaire soit, plus rarement, par voie racinaires ; les applications par voie racinaires en situations hydroponiques ne sont pas concernés par la présente invention.

Les ANN utilisées en agronomie sont soit de simples sels d'acide glutamique, voir de GABA (acide y - aminobutyrique), soit des « éliciteurs » plus complexes, notamment sous la forme l'oligosaccharides tels que les ulvanes (eg. FR 04 03267) voire certains types d'extraits d'algues tels que la laminarine (eg. FR 92 08387) ; le chitosan, voire la chitine, peuvent aussi parfois jouer un rôle d'ANN. Les ANN simples peuvent intervenir directement entant que substrats pour la glutamine synthétase (GS) et augmenter du coup le pool d'acide aminée précurseurs de la synthèse protéique chez les plantes. Les ANN plus complexes eux agissent surtout comme signaux moléculaires pouvant régir les défenses naturelles des plantes contre certains pathogène et, accessoirement, l'insertion de l'azote dans le cycle naturel de la synthèse des protéines. Or, l'utilisation d'ANN pour la fertilisation des grandes cultures non - légumineuses est aujourd'hui assez fastidieuse, notamment lorsque ceux-ci sont utilisés comme « garant protéiques » (FR 2 722 779) destinés à assurer ou augmenter la teneur en protéines des grains à la récolte.

L'utilisation d'ANN seuls n'augmente pas le coefficient d'utilisation de l'azote, et/ou les rendements, comme l'ont démontré les expériences avec Auxigro™ (Emerald Bioagriculture Inc., É-U., US 6,489,269) et Optéine™ (Goemar SA, France, EP 0 634 380 A2). L'application conjointe d'ANN et de solutions d'azote au feuillage (Woolfolk *et al*. 2002) fut donc essayée (eg. Plyléas™, Phyisa SA, France, EP 0 784 040). Bien que techniquement faisable, ces approches exigent néanmoins que l'ANN soit appliqué à un stade de croissance bien précis, ce qui rend cette intervention assez délicate. Par exemple, selon ces offres technologiques, il faut limiter l'application de l'ANN à certains stades de développement de la plante faute de quoi l'effet recherche sera indétectable. Selon l'état de la technique il faut repérer le stade où 100% des épis de la « table » (*i*.*e*. le champ) ont la base dégagé de quelques millimètres de la ligule à la dernière feuille, attendre impérativement 4 jours et pulvériser, le matin, du 4^{ième} au 13 jours après ce stade, voire pulvériser à ce même stade une fois 35% du grain formé (*cf*. Physia SA, Phyléas®). Il est aussi question d'appliquer l'ANN au stade « initiation du remplissage du grain » (*cf*. Emerald BioAgriculture, AuxiGro®), ou encore de pulvériser l'ANN entre les stades d'épiaison et de floraison (*cf*. Goëmar SA, Optéine®), soit dans les faits en dedans de quelques jours, voire au plus une semaine. Ces points de détails techniques compliquent appréciablement l'utilisation des ANN, en réduisent l'efficacité et l'incidence de réussite. D'autres produits - Multiréal® et Prim® (Goëmar SAS, France) sont utilisés plus librement, mais n'agissent par pour autant sur les teneurs en protéines et/ou directement sur le prélèvement d'azote par les racines ; par définition ces produits ne donc pas des ANN.

En effet, l'action des ANN - entant que *garant protéique* n'est utile qu'en fin de cycles de production des grandes cultures non - légumineuses lorsque le pool d'acides aminés (Noquet et al. 2004 ; Lawlor 2002) constitué au cours de la croissance végétative est épuisé. A ce moment, l'activation ponctuelle d'une ou de l'ensemble des enzymes responsables de l'entrée de l'azote dans le cycle naturel de la synthèse des protéines permet effectivement de « bourrer » un peu plus les réserves ultimes en protéine que sont généralement les graines. Ce forçage des teneurs et rendement en protéine des grains est limité étant donnée que la taille définitive de ces réserves ultimes est fixée par la plante en fonction de l'état nutritionnel de son appareil végétatif, et cela assez tôt dans son développement (Martre et al. 2003 ; Borras et Westgate 2006 ; Gamblin et al. 2006) ; la plante en ce sens assure une certaine adéquation entre la taille du susdit pool d'acide aminé, et celle des réserves ultimes.

### Fertilisation N foliaire ; quelle efficacité ?

La diffusion d'un aérosol d'ANN foliaire ver le feuillage est généralement non - limitatif en soi. La captation par la plante de cet ANN foliaire elle l'est, et plus particulièrement du susdit azote complémentaire, les feuilles n'ayant pas été conçues pour prélever l'azote. Il a donc été retenue que seul de petites doses, soit de 10 à 20 UN peuvent être absorbées, et cela qu'en tout fin du cycle végétatif. Pire, à ce stade le seul possible selon l'état de l'art pour l'application ANN foliaire, l'augmentation de l'assimilation de l'azote par voie de la stimulation d'une certaine activité enzymatique est très limité.

Par opposition, la diffusion d'un pédosol d'ANN racinaires vers les racines est lui limitatif en soi. Par contre, la captation de cet ANN racinaires par les racines, et donc du susdit azote complémentaire, est elle en principe très efficace du fait que les racines, contrairement aux feuilles, sont expressément conçues à cet effet. L'ampleur de l'effet bénéfique des ANN sur l'entrée de l'azote dans le cycle de l'azote de la plante est donc limitée par la captation de l'azote fertilisant et son assimilation pour ce qui est des ANN foliaire, voire par la diffusion et dans une moindre mesure l'assimilation de l'azote fertilisant dans le cas des ANN racinaires. Pourtant, le prélèvement et l'assimilation de l'azote par les racines peuvent être promus par voie d'augmentation de l'activité des la nitrate réductase (NR) et/ou de la glutamine synthétase (GS) (Wiren *et al*. 2000 ; Crawford et Glass 1998). L'augmentation de l'activité de la NR et de la GS de la plante peut être aussi stimulée par l'application (foliaire) de certains ANN, le plus simple étant le glutamate (EP 0 784 040 ; US 2003 022305).

Or, à ma connaissance cette stimulation systémique de la NR et GS via l'application aux feuilles d'ANN n'a jamais servit à optimiser l'interaction racines et certaines bactéries telluriques, y compris donc d'éventuelles BFCP réintroduites par inoculation, en présence de résidus de culture au sol incorporés.

### DIVULGATION DE L'INVENTION

### Problème technique

Étant donnée que la capacité des réserves ultimes, notamment les grains, est fixée assez tôt dans le développement des grandes cultures non - légumineuses, l'utilisation d'ANN capables d'améliorer l'alimentation en glucides et protéides de ces réserves sont peu ou pas efficace, hormis un certain effet de « bourrage » desdites réserves en tout fin de cycle de remplissage des grains, lorsque l'activité enzymatique responsable de l'entrée de l'azote dans le cycle naturel de synthèse des protéine est moribonde. A ce jour donc, l'utilisation d'ANN a surtout été cantonné à ce stade, et cela par voie d'application foliaire, et a donc été d'une efficacité limitée, et cela au prix d'un apport additionnel de quelques 20-30 unités (kg / ha) d'azote.

De plus, en présence d'une activité microbienne, bactérienne notamment, importante en proximité des racines, la plante est soumise à une sur - immobilisation de l'azote et, dans une moindre mesure, du phosphore. Cette sur - activité microbiologique est généralement attribuable à l'incorporation en surface d'importantes quantité de résidus de cultures pailleux au sol, voire aussi leur bactérisation à l'aide de bactéries favorisant la croissance des plantes (BFCP) particulièrement bien adaptées à la vie dans les sols.

Le problème technique consiste donc en une utilisation des ANN trop restrictive et d'une mode opératoire trop fastidieux) des ANN pour la fertilisation des grandes cultures non - légumineuses. Or, cet utilisation fastidieuse et trop peu souvent réussie ne contribue en rien à résoudre le susdit problème de sur - immobilisation de l'azote minéral par les BFCP.

### Solution technique

La solution technique proposée consiste en une utilisation de compositions pour la fertilisation des grandes cultures non - légumineuses, y compris donc les cultures hivernales de blé, d'orge, de seigle, d'avoine et de colza, en présence de résidus de culture pailleux au sol (RCsol). Ces compositions sont avantageusement des agents azoto - nutritionnel (ANN) capables de favoriser l'entrée de l'azote dans le cycle naturel de la synthèse protéique chez les plantes en stimulant l'activité enzymatiques, notamment celles de la glutamine synthétase (GS) et la nitrate réductase (NR) choisi parmi un group comprenant les ulvanes, le GABA, l'acide glutamique et certains de ses sels, l'hydrolysat de caséine, les acides acétique, citrique, glycolique, aspartiques, la proline, la chitine, et leurs dérivés et/ou un mélange de ceux-ci. Ces ANN sont appliqués au feuillage pendant la période de croissance végétative de la culture et avant la phase de remplissage accéléré des grains, soit du stade Zadoks 30 à 39, et de préférence en sortie d'hiver conjointement à une application de solution d'azote fertilisante, soit du stade Zadoks 39 à 55, et de préférence en combinaison avec un traitement phytosanitaire appliqué au feuillage. Les susdits résidus de cultures au sol sont en quantité et de nature à provoquer l'immobilisation microbienne de l'azote et du phosphore une fois incorporés au sol, soit avantageusement avec un rapport carbone / azote d'au moins 25 et en quantité supérieure à 7 tonnes par hectare. Ces résidus de culture peuvent être avantageusement bactérisées à l'aide de bactéries favorisant la croissance des plantes (BFCP), phytogènes et particulièrement bien adaptées à la vie dans les sols, notamment au sens de notre précédente demande de brevet FR 01 15542. Plus spécifiquement, ces BFCP sont plus phytogènes que l'ensemble des souches témoins décrites dans la susdite demande FR 01 15542. Dans le cadre de la présente invention, je propose donc une méthode de fertilisation des grandes cultures non - légumineuses d'hiver comprenant des ANN et des résidus pailleux de culture au sol, avantageusement bactérisés à l'aide de BFCP phytogènes et bien adaptées à la vie dans les sols.

En situations de fertilisation raisonnée et de RCsol valorisés *in situ* par incorporation, voire bactérisés à l'aide d'inocula de BFCP bien adaptées à la vie dans les sols (AVS), il s'agit de faire intervenir un agent azoto-nutritionnel (ANN) normalement peu ou pas efficace seul. Or, la stimulation de l'activité enzymatique responsable de l'entrée de l'azote dans le cycle de la synthèse protéique à l'aide de ANN appliqués librement au feuillage au cour de la période de croissance végétative, soit généralement dès la sortie d'hiver et/ou dès le stade 31 selon les échelles Zadoks ou BBCH, permet à la plante de mieux tirer partie de l'azote et du phosphore disponibles au dépends des bactéries et des BFCP en proximité de leurs racines.

### Avantages apportés

L'inventeur a pu observer que certaines espèces de grandes cultures non - légumineuses produites sur résidus de cultures pailleux incorporés sont moins affectées par l'immobilisation de l'azote et du phosphore que provoquent lesdites BFCP. L'action des ANN est en ce sens maintenant plus attractive puisqu'elle favorise l'absorption de l'azote minéral par les racines dont l'alimentation nutritive est maintenant mise à l'épreuve par la suractivité de certaines bactéries du sol, y compris éventuellement les BFCP réintroduites par inoculation, lorsque mises en contacte avec les RCsol. A noter que paradoxalement, c'est cette suractivité bactérienne qui permet de valoriser d'autant plus les ANN autrement cantonnés dans leur médiocre rôle de bourrage de grains déjà pour l'essentiel bien remplis.

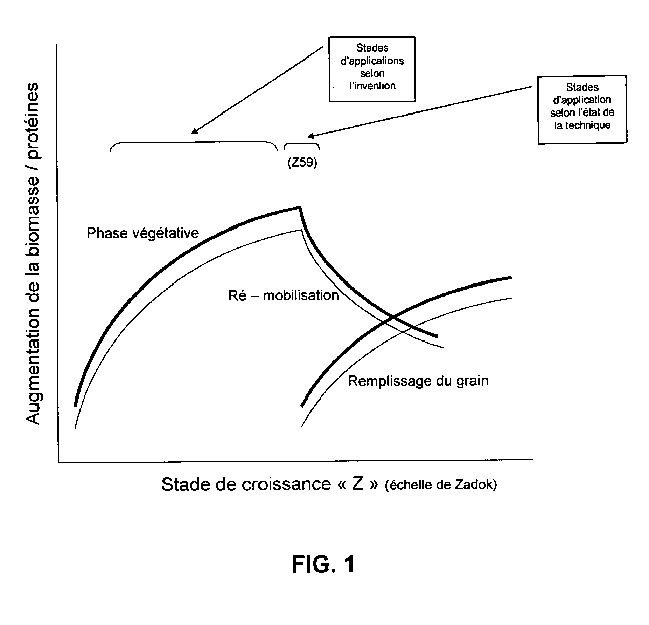

Du fait que les ANN ne servent plus qu'à « bourrer » un peu plus les réserves ultimes que sont les grains, leurs applications n'est pus nécessairement cantonnées qu'aux alentours immédiats du stade Zadoks Z58-59, mais peuvent se faire librement tout au cours de la phase végétative dans la mesure où il y a suffisamment de feuillage pour assurer la captation des ANN (Figure 1), soit généralement dès la sortie d'hiver et/ou dès le stade 31 selon les échelles Zadoks et/ou BBCH.

L'invention encourage l'incorporation des résidus de culture au sol, pratique culturale favorable à la conservation des sols et le captage des gazes à effet de serre. De plus, l'application des ANN au sens de l'invention ne nécessite plus impérativement l'utilisation conjointe d'inocula BFCP, mais peut être utile qu'en présence de simple résidus du culture au sol incorporés et source d'immobilisation microbienne d'azote. L'invention permet cependant aussi d'accroître l'efficacité relative d'inocula BFCP appliqués aux résidus de culture au sol pour fins de fertilisation de grandes cultures non - légumineuses. L'invention permet aussi d'économiser, selon le diagnostique intra - saisonnier du protocole de fertilisation raisonnée le suggère, sur l'apport des quelques 25 - 33 UN normalement nécessaires en guise de surdoses d'azote afin de contrer l'immobilisation de l'azote microbienne de l'azote par la microflore (bactérienne) sur - actives en présence de résidus de culture au sol incorporés.

### MODE DE RÉALISATION PRÉFÉRÉ DE L'INVENTION

Selon un mode de réalisation préféré de l'invention, il est avantageux d'utiliser librement un ANN réputé sur une céréale, voire un colza d'hiver, cultivés en présence d'une abondance de résidus de culture pailleux au sol incorporés en surfaces, avantageusement sur 5 à 12 cm. Les ANN réputés comme efficaces sont des éléments nutritifs, des complexes chimiques minéraux ou organiques, des microorganismes influençant l'activité des enzymes NR et/ou GS, et/ou influant sur la chaîne biochimique d'assimilation de l'azote. L'ANN, avantageusement des sels d'acide glutamique et/ou des polysaccharides tel que les ulvanes et les glucans formulés et conditionnés sous la forme d'une poudre mouillable, est appliquée au feuillage à une dose hectare, selon les recommandation du fabricant. L'utilisation d'un adjuvant, selon les recommandations du fabricant, et avantageuse mais ne fait pas en soi partie intégrante de la présente invention. L'application de l'ANN peut se faire, sur la base des doses - hectares recommandées par le fabricant si applicables, selon les stades de croissances de la culture et ou son système de culture. Par exemple, dans le cas des cultures céréalières d'hiver, il est avantageux d'intervenir librement en sortie d'hiver conjointement au premier apport fractionné d'azote minéral fertilisant. Pour évaluer les effets phytogènes en serres, les applications de l'ANN peuvent avantageusement être réalisées 14 à 28 jours post semis (jps), et cela pour la plupart de espèces céréalières ou fourragères généralement utilisées pour ce type de manipulations.

Selon un mode de réalisation préféré de l'invention, les résidus de culture au sol peuvent aussi être appliqués (mise en contacte) avec des BFCP particulièrement bien adaptées à la vie dans les sols arables. Ces BFCP avantageusement diazotrophes et/ou capables de solubiliser les orthophosphates (phosphates) calcio - magnésiques (P-Ca/Mg) et/ou les alumino - ferriques (P-Al/Fe), et contribuent ainsi à une meilleure alimentation de la plante. Par exemple, et pour certaines de nos exemples d'applications rapportées ici, les souches bactériennes ont été isolées de deux sols français déjà décrits dans notre précédent brevet FR 01 15542. Pour des formulations BFCP destinées à la pulvérisation liquide, avantageusement selon l'approche proposée dans notre précédente demande de brevet FR 05 05753, et destinée aux cultures d'hivers en présence au sol de résidus de cultures pailleux plus ou moins incorporés au moment des semis à l'automne (Claude et Fillon 2004), il est loisible d'appliquer l'ANN conjointement à la pulvérisation d'une solution d'azote fertilisant en sortie d'hiver, voire un peu plus tard vers la mi-mars ; si une tel application au sol d'azote en solution n'est pas prévue, l'ANN peut être appliquer au feuillage peu après l'apport d'Nf granulaire. Selon le mode de réalisation préférée de l'invention, deux souches BFCP diazotrophes et isolées selon FR 01 15542, sont avantageusement produites par fermentation à l'état solide et inoculées sur des résidus de culture pailleux à hauteur d'au moins 1^{e}5 par g (*i*.*e*. 1x10⁵ cellules BFCP par g de résidus), intensité de bactérisation tel que recommandée au champ pour fin de valorisation agronomique des résidus de culture au sol (Claude et Fillion 2004). Des résidus de cultures sont incorporés à un sol reconstitué en pot à hauteur de 1 % p/p, soit l'équivalent d'un apport au champ de plus de 10 Mg de résidus de culture au sol par hectare. Les plantes-tests sont par la suite semées et dûment fertilisées, hormis l'apport d'azote fertilisant et/ou d'un ANN. Une fois la montaison amorcée, stade de croissance avantageux mais non - limitatif, l'azote est apportée et, dans la foulée, le traitement ANN effectué.

Il s'agit de combiner avantageusement au sein d'un même mode opératoire d'une part l'action des ANN sur les activités enzymatiques responsables de l'entrée de l'azote dans le cycle naturel de la synthèse des protéines, notamment la nitrate réductase (NR) et la glutamine synthétase (GS) et d'autre part, le cas échéant, l'action phytogène de BFCP particulièrement bien adaptées à la vie dans les sol et disposées en proximité des semences et/ou des racines. Or, bien que l'état de la technique comprend aujourd'hui une certaine valorisation de ces modes d'action, leur combinaison avantageuse permettant une certaine souplesse d'utilisation, c'est-à-dire sans avoir à respecter impérativement une étroite fenêtre d'application aux alentours du stade de l'épiaison (1cm) mais avant celui du stade de remplissage du grain, fait défaut.

Or, j'ai découvert, et cela contrairement aux habituelles conventions d'usage prescrites pour les ANN, qu'un ANN simple, un sel d'acide glutamique par exemple, appliqué n'importe quand, du semis au stade pré - épiaison (Figure 1) est apte à avoir un effet agronomique comparable à celui obtenu selon l'état de la technique, et cela si et seulement si la grande culture a été préalablement inoculées selon l'une ou l'autre de nos précédentes inventions brièvement décrites dans FR 06 03577 (dite « MSOL » et destinées aux grandes cultures céréalières d'hivers, y compris le colza), et FR 06 03576 (dite « EOMI » et destinées aux grandes cultures céréalières de printemps telles que le maïs et le sorgho, voir éventuellement certaines céréales d'hivers établis en semi - direct). Les BFCP doivent aussi être impérativement AVS, avantageusement obtenu selon le mode d'obtention décrit dans notre précédente invention (FR 01 15542).

En ce sens, cette utilisation nouvelle des ANN, conjointement aux susdits inocula BFCP est avantageuse puisque l'ANN peut maintenant être appliqué aux semis avec les semences, en post-levée avec des herbicides, voire dès la sortie d'hiver avec des solution d'azote (UAN) sans avoir à attendre et/ou respecter impérativement un stade de croissance bien précis, à savoir Z59 sur l'échelle de Zadok (Figure 1). Préférentiellement il s'agit de ;
- Apporter, le cas échéant, les BFCP aux résidus de culture au sol : Des bactéries favorisant la croissance des plantes (BFCP) adaptées à la vie dans les sols (AVS), avantageusement isolées et mise en culture selon notre précédente invention (FR 01 15542) sont apportées en proximité des racines afin de leurs permettre d'exercer leurs effets phytogènes. Ces bactéries sont avantageusement diazotrophes (« fixatrices d'azote ») et/ou capables de solubiliser les phosphates calcio - magnésiques, voire plus rarement alumino - ferriques, du sol normalement peu ou pas phyto - disponibles. Nonobstant leurs niveaux d'adaptations à la vie dans les sols, le caractère phytogène des BFCP a préalablement été démontré.
- Appliquer librement les ANN au feuillage : Les ANN peuvent être apportées en post-levée, en sortie d'hiver au moment de l'apport du premier apport d'azote en solution, voire au moment du second apport d'azote en solution, et cela dans la mesure que ces apports d'azote en solution, notamment le second, permettent un certain contacte avec le feuillage.
   L'application des ANN, avantageusement de simples sels d'acide glutamique, de GABA, voire éventuellement des ANN plus élaborés tels que des « éliciteurs » à base d'oligosaccharides, peut donc être avantageusement combinée à celles ; (i) des engrais starter non - bactéricide, avantageusement organo-minéraux au sens de FR 06 03576, contenant les susdites BFCP AVS, (ii) des herbicides post-levés, et/ou (iii) des application de solutions azotées fertilisantes en sortie d'hiver et/ou en début de printemps. Dans le cas des applications post-semis, il est comme de raison judicieux de s'assurer qu'il existe suffisamment de feuillage capable de capter l'ANN, soit avantageusement à partir du stade de croissance 26-29 sur l'échelle de Zadoks. L'application de l'ANN n'a pas à être réalisée à un stade d'application précise, si ce n'est de réaliser l'application avant les stades d'épiaison, soit au alentours des stades 55-59 sur l'échelle de Zadoks. Les doses hectares à respecter cependant sont celles actuellement prescrites pour les utilisations conventionnelles, soit, dans le cas de simples sels d'acides glutamique environ 350 à 500 g par hectare, mais ne nécessitent pas l'apport conjoint d'azote en solution (39%) à hauteur de 20 kg N / ha comme c'est actuellement le cas selon l'état de la technique (*cf*. Phyléas®, Physia SA). Le développement éventuel d'ANN pondéralement plus efficace n'est pas à exclure du champ d'application de la présente invention.

### APPLICATIONS BIOINDUSTRIELLES ET AGRONOMIQUES

### Expérimentation 1

Dans cette expérimentation il s'agit de démonter que l'application de l'ANN, ici de un sel sodique d'acide glutamique n'est plus restreint à un stade très précis (*i*.*e*. Zadoks (Z) 59), mais peut maintenant, du fait par exemple de la présence des susdites BFCP et/ou d'une suractivité de la microflore bactérienne du fait d'une apport massif de résidus de culture au sol, être efficace lorsque appliqué librement à divers stades au cours de la phase végétative de croissance. J'ai réalisé cette expérimentation en double, question de démontrer l'utilité des ANN au sens de l'invention avec et sans la bactérisation BFCP des résidus de culture au sol.

Dans des pots de 10 L j'ai reconstitué 12,5 kg d'un sol arable de milieu tempéré - un limon argileux (2% matière organique, 20% argile, pH 6,7 et CEC ∼ 100 méq/kg). J'ai incorporé par malaxage 125 g de résidus de culture pailleux de blé de printemps (TABLEAU 1 B) enduit de, le cas échéant (TABLEAU 1A), 10^{e}7 (10⁷) cellules AZB (*Azotobacter* spp.) obtenues selon le protocole d'obtention décrit dans notre précédente demande de brevet FR 01 15542. Ce titre par bactérien par g de résidus de culture est comparable à celui rapporté par Claude et Fillion (2004) pour la bactérisation azotobactérienne des résidus de culture au sol *in situ*.

J'ai semé, à 2,5 cm de profondeur, 10 graines de blé (variété « CDC Falcon » couramment utilisée au Canada) dont cinq (5) ont été retenues à la levée (stade 10 sur l'échelle de Zadoks). Semés en serre, les conditions d'illumination et de température ambiantes ont été régies de façon à permettre le développement normal et complet (*i*.*e*. de Z00 à Z99) d'un blé d'hiver.

Pour simuler une fertilisation raisonnée, j'ai fractionné un apport global de 75 mg / kg de sol d'azote sous forme de nitrate d'ammonium en trois (3) apports successifs aux stades Z30, Z31 et Z37, soit l'équivalent d'environ 150 kg N / ha. Nous considérons que ces apports fractionnés permettent d'éviter les surdoses pouvant nuire à l'activité diazotrophe des AZB3186 et les « sous-doses » pouvant nuire à l'alimentation en azote des racine, notamment en présence de BFCP bien adaptées à la vie dans les sols.

Aux stades Zadoks (Z) 30, 31, 37 et 39 j'ai appliqué au feuillage l'équivalent de 400 g / ha de glutamate (sel sodique d'acide glutamique) par pulvérisation liquide (sans l'apport d'azote et/ou d'adjuvants). Au stade Z59 (21 janvier 05), j'ai appliqué l'équivalent de 400 g / ha de glutamate en plus de l'équivalent de 20 unités d'azote (solution 39%) au feuillage, soit selon l'état de la technique en conformément aux prescriptions pour la référence Phyléas® (Physia SA, France).

Un fois les grains physiologiquement mature (Zadok 92-99 ; 25 mars 05), ils ont été récoltés, comptés et pesés et cela pour chacun des 36 pots contenant chacun les 5 plants de blé. Les poids de ces grains, leurs teneur en azote, et donc aussi le prélèvement en azote protéique (mg N / pot) est rapporté pour chacune des six (6) modalités, y compris donc les témoins sans biofertilisations au sens de la présente invention et/ou selon la référence Phyléas® (Physia SA, France), sont rapporté au Tableaux 1 A et 1 B ;

**TABLEAU 1A : (avec BFCP) - Production de matière sèches des parties aériennes de plantules de blé selon la modalité de traitment ANN**

| Modalité ANN | ANN | AZB | g grain 1 pot | %N | mg N / pot | efficacité / témoin (%) | |
|---|---|---|---|---|---|---|---|
| | | | | | | g grain / pot | mg N / pot |
| témoin (avec RCsol) | non | non | 4,44 | 2,00 | 88,8 | na | na |
| Avec ANN à Zadoks 30 | oui | oui | 5,22 | 2,10 | 110 | 118 | 123 |
| Avec ANN à Zadoks 31 | oui | oui | 5,18 | 2,10 | 109 | 117 | 123 |
| Avec ANN à Zadoks 37 | oui | oui | 5,23 | 2,10 | 110 | 118 | 124 |
| Avec ANN à Zadoks 39 | oui | oui | 5,29 | 2,11 | 112 | 119 | 126 |
| avec Phyléas à Zakods 59 | oui | non | 5,19 | 2,09 | 108 | 117 | 122 |
| | | | | | | | |
| %CV | | | 6,5 | 3,1 | 6,9 | | |
| P>F | | | > 0,01 | > 0,01 | > 0,01 | | |
| ppds | | | 0,15 | 0,05 | 5,8 | | |
| | | | | | | | |

**TABLEAU 1B : (sans BFCP) - Production de matière sèches des parties aériennes de plantules de blé selon la modalité de traitment ANN**

| Modalité ANN | ANN | AZB | q grain / pot | %N | mq N / pot | efficacité / témoin (%) | |
|---|---|---|---|---|---|---|---|
| | | | | | | g grain / pot | mg N / pot |
| témoin (avec RCsol) | non | non | 4,24 | 1,96 | 83,1 | na | na |
| avec ANN à Zadoks 30 | oui | non | 4,89 | 2,09 | 102 | 115 | 123 |
| avec ANN à Zadoks 31 | oui | non | 4,87 | 2,09 | 102 | 115 | 122 |
| avec ANN à Zadoks 37 | oui | non | 5,00 | 2,08 | 104 | 118 | 125 |
| avec ANN à Zadoks 39 | oui | non | 4,93 | 2,10 | 104 | 116 | 125 |
| avec Phyléas à Zakods 59 | oui | non | 4,80 | 2,09 | 100 | 113 | 121 |
| | | | | | | | |
| %CV | | | 6,3 | 3,1 | 6,5 | | |
| P>F | | | > 0,01 | > 0,01 | > 0,01 | | |
| ppds | | | 0,13 | 0,05 | 5,4 | | |
| | | | | | | | |

Les pots (72 en tout ; 2 x 6 x 6)) abritant chacun cinq (5) plants de blé des stades Z00 à Z99 ont été disposées en « carrés latins », et les données (rendements en grain et en azote protéique par pot) traitées à l'aide d'une analyse de variance (Anova). Les coefficients de variabilités (%CV), les probabilités dites « alpha » (P>F), ainsi que les plus petites différences significatives (ppds) entre les moyennes attribuables aux différentes modalités sont rapportés aux Tableaux 1A (avec bactérisation des résidus de culture) et 1 B (sans bactérisation des résidus de culture). Comme nous pouvons le voir, les augmentations des rendements en grain et en azote protéiques attribuables aux divers traitements ANN-BFCP selon l'invention, et cela indépendamment du stade de croissance auxquels les ANN ont été appliqués, sont comparables à celles attribuables à la référence Phyléas® appliquée très strictement au stade Z59 selon son mode opératoire prescrit par le fabricant (Physia SA) et comprenant en plus l'équivalent de 20 unités (kg) d'azote par hectare appliqué simultanément au feuillage sous forme d'une solution azotée (39%).

L'enfouissement des résidus de culture au sol non bactérisés à l'aide de BFCP permet aussi de mettre en évidence l'utilité des ANN au sens de l'invention. Cependant, l'efficacité relative desdits ANN est un peu moindre et démontrer bien qu'il y a une synergie entre les BFCP et les traitement ANN au sens de l'invention.

### Expérimentation 2

Il fallut démontrer que l'ANN utilisé au sens de la présente invention peut se substituer au quelques 33 kg / ha (unité) d'azote minéral normalement apportés pour atténuer l'effet de l'enfouissement des résidus de culture au sol. J'ai réalisé trois versions de cette expérimentation, avec des plantules de blé, de maïs et de raygras, sur des période allant de 35 jours post semis (jsp) pour le maïs et le blé, à 64 jps pour le raygras. A noter qu'aucune de modalité n'a reçu les habituelle 33 UN normalement apporté afin de contrer le susdit effet nuisible ; les modalités blé et maïs n'ayant reçu que 35 mg-N (NO3NH4) / kg de sol à 21 jps, et celles du raygras à 28 jps.

J'ai n'es pas ici bactérisé les résidus de culture afin de démontrer que l'utilisation des ANN librement au cours de la phase végétative de croissance de la plante, peut atténuer l'effet de l'immobilisation de l'azote minéral par la microflore du sol gorgée de substrat carbonés provenant de la décomposition in situ desdits résidus de culture.

Afin de permettre une plus grande précision expérimentale, chacune des ces quatre (4) modalités de traitements (voir ci-dessous) est appariée avec un pot sans résidus de culture au sol ; ces unités expérimentales appariées permettent une plus grande précision en permettant le calcul de l'efficacité relative de ces modalités par rapport au témoins apparié sans résidus de culture. Comme de raison, en ce sens, l'efficacité relative du traitement - témoin sans résidus de culture (voir Tableau 2) sera de 100%. Disposé linéairement en serre, chacune de ces modalités « appariées » (trois traitements et le témoins sans résidus de culture) sont répétées quatre fois, soit 32 (4 x 4 x 2) pots en tout par exemple d'application.

### Exemple d'application 2-a (blé)

Dans des pots contenant 200 g de sol de sol arable (terrefort, France) sec et reconstitué j'ai incorporé par malaxage 2 g de résidus de culture (blé) et établit dix plantules de blé (*Triticum aestivum* L.). Les résidus de culture n'ont pas été préalablement traités avec une suspension BFCP dites AZB 31 et 86 déjà rapportée (FR 01 15542, Claude et Fillion 2004). Des pots, avec et sans ANN ou les 33 UN normalement utilisé pour compenser pour la susdite immobilisation de l'azote, forment une unité expérimentale permettant de calculer l'efficacité relative de l'ANN et/ou des 33 UN. J'ai aussi inclus un témoins sans résidus de culture et une modalité de références avec résidus de culture mais sans ANN ou les susdits 33 UN. L'ANN (*i*.*e*. l'équivalent de 350 g de glutamate par hectare) a été appliquée au feuillage à l'aide d'un aérosol 21 jours post semis. Deux semaines plus tard j'ai récolté l'ensemble des plantules, y compris leurs racines. La matière sèche des parties aériennes (MSPA) et des racines ont été déterminés séparément et l'index végétatif (« IV ») calculé.

### Exemple d'application 2-b (maïs)

Dans des pots de deux litres contenant 1,667 kg de sol gleysolique de la région de Saint Lambert (Québec) et reconstitué pour fin d'expérimentation en serre j'ai incorporé 16,7 gram de résidus de culture pailleux (blé). J'ai établit trois plantules de maïs dans chaque pot et fertilisé avec un minimum de phosphate d'ammonium pour en assurer le démarrage. Les résidus de culture n'ont pas été préalablement traités avec une suspension BFCP dites AZB3186 déjà rapportée (FR 01 15542, Claude et Fillion 2004). Des pots, avec et sans ANN ou les 33 UN normalement utilisé pour compenser pour la susdite immobilisation de l'azote, forment une unité expérimentale permettant de calculer l'efficacité relative de l'ANN et/ou des 33 UN. J'ai aussi inclus un témoins sans résidus de culture et une modalité de références avec résidus de culture mais sans ANN ou les susdits 33 UN. L'ANN (*i*.*e*. l'équivalent de 350 g de glutamate par hectare) a été appliquée au feuillage à l'aide d'un aérosol 21 jours post semis. Deux semaines plus tard j'ai récolté l'ensemble des plantules, y compris leurs racines. La matière sèche des parties aériennes (MSPA) et des racines ont été déterminés séparément et l'index végétatif (« IV ») calculé.

### Exemple d'application 2-c (Lotium)

Dans des pots contenant 200 g de sol de sol arable (terrefort, France) sec reconstitué j'ai incorporé par malaxage 2 g de résidus de culture (blé) et établit du raygras (*Lotium multiflorum* Lam). L'utilisation du raygras à l'avantage de permettre de multiples coupes. Ces coupes (Cn), effectuées à 7 ou 10 jours d'intervalles, permettent donc de prolonger, par exemple, la période d'incubation des résidus de culture à 64 jps. Vingt-cinq (25) plantules de *Lolium multiflorum* par pot de 500 g de sol amendé avec 1% p/p de résidus de cultures céréalières (blé) ont été utilisés. Les plantules ont été suffisamment alimentés en eau et en nutriments sur une période de 35 jours de façon à permettre une croissance végétative abondante en serre au moment de la première coupe, dite C1 ; en tout quatre coupes ont été effectuées à 10 jours d'intervalles. Des pots, avec et sans ANN ou les 33 UN normalement utilisé pour compenser pour la susdite immobilisation de l'azote, forment une unité expérimentale permettant de calculer l'efficacité relative de l'ANN et/ou des 33 UN. J'ai aussi inclus un témoins sans résidus de culture et une modalité de références avec résidus de culture mais sans ANN ou les susdits 33 UN. L'ANN (*i*.*e*. l'équivalent de 350 g de glutamate par hectare) a été appliquée au feuillage à l'aide d'un aérosol 28 jours post semis. Une semaine plus tard j'ai effectué la première coupe (C1), et ainsi de suite tout les 10 jours ; l'ensemble des quatre coupes ainsi effectuées ont été combinés afin de déterminer la production de matière sèche des parties aériennes (MSPA).

Même en présence de résidus de culture au sol incorporés et d'une microflore bactérienne suractive, les blés, maïs et raygras peuvent rendent autant de MSPA que s'ils avaient reçu l'équivalent de 33 UN au lieu de la dite dose d'ANN.

**TABLEAU 2 : Efficacité relative des diverses modalités de traitement par rapport à un témoin apparié sans résidus de culture.**

| | Modalité de traitement | efficacité relative 1 témoin apparié (%) | | | |
|---|---|---|---|---|---|
| | | MSPSA sec | mg N / pot | mg P / pot | IV |
| | Expérimentation 2-a | | | | |
| Blé | témoin (sans résidus de culture) | 100 | 100 | 100 | 100 |
| | avec résidus de culture | 90 | 89 | 92 | 90 |
| | avec résidus de culture et 33 UN | 99 | 101 | 101 | 100 |
| | avec résidus de culture et ANN | 99 | 98 | 98 | 100 |
| | %CV | 5,3 | 3,0 | 6,1 | 6,1 |
| | P>F | > 0,01 | > 0,01 | > 0,01 | > 0,01 |
| | ppds | 4 | 4 | 4 | 5 |
| | | | | | |
| | Expérimentation 2-b | | | | |
| Maïs | témoin (sans résidus de culture) | 100 | 100 | 100 | 100 |
| | avec résidus de culture | 91 | 90 | 89 | 92 |
| | avec résidus de culture et 33 UN | 100 | 103 | 99 | 98 |
| | avec résidus de culture et ANN | 102 | 99 | 100 | 101 |
| | %CV | 6,0 | 3,1 | 6,5 | 6,0 |
| | P>F | > 0,01 | > 0,01 | > 0,01 | > 0,01 |
| | ppds | 5 | 5 | 4 | 5 |
| | | | | | |
| | Expérimentation 2-c | | | | |
| Lolium | témoin (sans résidus de culture) | 100 | 100 | 100 | 100 |
| | avec résidus de culture | 87 | 91 | 89 | 88 |
| | avec résidus de culture et 33 UN | 101 | 102 | 100 | 99 |
| | avec résidus de culture et ANN | 98 | 98 | 98 | 98 |
| | %CV | 5,0 | 4,1 | 7,5 | 5,9 |
| | P>F | > 0,01 | > 0,01 | > 0,01 | >0,01 |
| | ppds | 4 | 3 | 4 | 4 |
| | | | | | |

### Expérimentation 3

Il fallut démonter que l'ANN utilisé au sens de la présente invention permet, en absence de surdoses d'azote tel que préconisé par la fertilisation raisonnée, d'atténuer l'effet agronomique nuisible attribuable à l'enfouissement des résidus de culture au sol et/ou, le cas échéant, d'augmenter l'efficacité relative des BFCP appliquées sur ceux-ci. Pour ce faire, j'ai de nouveau réalisé une série de trois expérimentation avec des plantules de blé, de maïs et de raygras sur une période allant de 35 jps pour le blé et le maïs, et 64 jps pour le raygras. A noter qu'aucune de modalité n'a reçu les habituelle 33 UN normalement apporté afin de contrer le susdit effet nuisible ; les modalités blé et maïs n'ayant reçu que 35 mg-N (NO3NH4) / kg de sol à 21 jps, et celles du raygras à 28 jps.

Afin de permettre une plus grande précision expérimentale, chacune des ces quatre (4) modalités - traitements est appariée avec un pot sans résidus de culture au sol ; ces unités expérimentales appariées permettent une plus grande précision en permettant le calcul de l'efficacité relative de ces modalités par rapport au témoins apparié sans résidus de culture. Comme de raison, en ce sens, l'efficacité relative du traitement - témoin sans résidus de culture (voir Tableau 2) sera de 100%. Disposé linéairement en serre, chacune de ces quatre modalités « appariées » (trois traitements et le témoins sans résidus de culture) sont disposées en quatre répétitions, soit 32 (4 x 4 x 2) pots en tout par exemple d'application.

### Exemple d'application 3-a (blé) :

Dans des pots contenant 200 g de sol de sol arable (terrefort, France) sec reconstitué j'ai incorporé par malaxage 2 g de résidus de culture (blé) et établit dix plantules de blé *(Triticum aestivum* L.). J'ai inclus un témoin sans résidus de culture, et une modalité de référence avec résidus de culture. Les ANN, ainsi que les BFCP dites AZB3186 déjà rapportée (FR 01 15542, CA 2 467 441 ; Claude et Fillion 2004) ont été essayés séparément en en combinaison au sens de l'invention. L'ANN (*i*.*e*. l'équivalent de 350 g de glutamate par hectare) a été appliquée au feuillage à l'aide d'un aérosol 21 jours post semis. Deux semaines plus tard j'ai récolté l'ensemble des plantules, y compris leurs racines. La matière sèche des parties aériennes (MSPA) et des racines ont été déterminés séparément et l'index végétatif (« IV ») calculé.

### Exemple d'application 3-b (maïs) :

Dans des pots de deux litres contenant 1,667 kg de sol gleysolique de la région de Saint Lambert (Québec) et reconstitué pour fin d'expérimentation en serre j'ai incorporé 16,7 gram de résidus de culture pailleux (blé). J'ai établit trois plantules de maïs dans chaque pot et fertilisé avec un minimum de phosphate d'ammonium pour en assurer le démarrage. J'ai inclus un témoin sans résidus de culture, et une modalité de référence avec résidus de culture. Les ANN, ainsi que les BFCP dites AZB3186 déjà rapportée (FR 01 15542, Claude et Fillion 2004) ont été essayés séparément en en combinaison au sens de l'invention. L'ANN (*i*.*e*. l'équivalent de 350 g de glutamate par hectare) a été appliquée au feuillage à l'aide d'un aérosol 21 jours post semis. Deux semaines plus tard j'ai récolté l'ensemble des plantules, y compris leurs racines. La MSPA et des racines ont été déterminés séparément et l'index végétatif (« IV ») calculé.

### Exemple d'application 3-b (Lolium) :

Dans des pots contenant 200 g de sol de sol arable (terrefort, France) sec reconstitué j'ai incorporé par malaxage 2 g de résidus de culture (blé) et établit du raygras (*Lolium multiflorum* Lam). Des coupes (Cn), effectuées à 7 ou 10 jours d'intervalles, permettent donc de prolonger la période d'incubation des résidus de culture à 64 jps. Vingt-cinq plantules de *Lolium multiflorum* par pot de 500 g de sol amendé avec 1 % p/p de résidus de cultures céréalières (blé) ont été utilisés. Les plantules ont été suffisamment alimentés en eau et en nutriments sur une période de 35 jours de façon à permettre une croissance végétative abondante en serre au moment de la première coupe, dite C1 ; en tout quatre coupes ont été effectuées à 10 jours d'intervalles. J'ai inclus un témoin sans résidus de culture, et une modalité de référence avec résidus de culture. Les ANN, ainsi que les BFCP dites AZB 31 et 86 déjà rapportée (FR 01 15542, Claude et Fillion 2004) ont été essayés séparément en en combinaison au sens de l'invention. L'ANN (*i*.*e*. l'équivalent de 350 g de glutamate par hectare) a été appliquée au feuillage à l'aide d'un aérosol 28 jours post semis. Une semaine plus tard j'ai effectué la première coupe (C1), et ainsi de suite tout les 10 jours ; l'ensemble des quatre coupes ainsi effectuées ont été combinés afin de déterminer la production de matière sèche des parties aériennes (MSPA).

**TABLEAU 3 : Efficacité relative des diverses modalités de traitement par rapport à un témoin apparié sans résidus de culture (%).**

| | Modalité de traitement | | efficacité ∼ témoin (100) | | |
|---|---|---|---|---|---|
| | | MSPSA sec | mg N / pot | mg P / pot | IV |
| | Expérimentation 3-a | | | | |
| Blé | témoin (sans résidus de culture) | 100 | 100 | 100 | 100 |
| | avec résidus de culture | 91 | 89 | 90 | 90 |
| | avec résidus de culture et ANN | 98 | 98 | 98 | 98 |
| | avec résidus de culture et BFCP | 84 | 87 | 88 | 85 |
| | avec résidus de culture, BFCP et ANN | 104 | 105 | 105 | 105 |
| | %CV | 6,3 | 3,8 | 6,0 | 5,1 |
| | P>F | > 0,01 | > 0,01 | > 0,01 | > 0,01 |
| | ppds | 5 | 4 | 4 | 5 |
| | | | | | |
| | Expérimentation 3-b | | | | |
| Maïs | témoin (sans résidus de culture) | 100 | 100 | 100 | 100 |
| | avec résidus de culture | 90 | 90 | 90 | 90 |
| | avec résidus de culture et ANN | 98 | 98 | 98 | 98 |
| | avec résidus de culture et BFCP | 85 | 85 | 85 | 85 |
| | avec résidus de culture, BFCP et ANN | 105 | 105 | 105 | 105 |
| | %CV | 4,3 | 3,0 | 6,1 | 6,1 |
| | P>F | > 0,01 | > 0,01 | > 0,01 | > 0,01 |
| | ppds | 4 | 5 | 4 | 5 |
| | | | | | |
| | Expérimentation 3-c | | | | |
| Lolium | témoin (sans résidus de culture) | 100 | 100 | 100 | 100 |
| | avec résidus de culture | 90 | 88 | 90 | 90 |
| | avec résidus de culture et ANN | 99 | 98 | 98 | 98 |
| | avec résidus de culture et BFCP | 87 | 86 | 82 | 81 |
| | avec résidus de culture, BFCP et ANN | 105 | 104 | 102 | 103 |
| | %CV | 5,0 | 4,0 | 5,1 | 5,7 |
| | P>F | > 0,01 | > 0,01 | > 0,01 | > 0,01 |
| | ppds | 4 | 4 | 3 | 5 |
| | | | | | |

Sachant que l'ANN peut se substituer aux quelques 33 UN, il fallut évaluer son impact sur l'efficacité relative des BFCP. En effet, l'agriculteur ayant maintenant économiser environs 25 € sur sa fertilisation azotée pourra se permettre d'investir 15 - 18 € sur un inocula BFCP véritablement adapté à la vie dans les sols et applicable aux résidus de culture au sol.

### Références, bibliographie et brevets pertinents

Borras, L. et M.E. Westgate. 2006. Predicting maize kernel sink capacity early in development. Field Crop Res. 95:223-233.
Bly, A.G. et H.J. Woodard. 2003. Foliar nitrogen application timing influence on grain yield and protein concentration of hard red winter and spring wheat. Agron. J. 95:335-338.
Cheshire, M.V., C.N. Bedrock, B.L. Williams, B.T. Christensen, I. Thomsen et P. Alpendre. 1999. Effect of climate and soil type on the immobilization of nitrogen by decomposing straw in northern and southern Europe. Biol. Fert. Soil. 28 :306-312.
Claude, P-P. et L. Fillion. 2004. Effet de l'apport d'un inoculum bactérien aux résidus de culture de maïs-grain au sol sur le rendement et la qualité de blés d'hiver panifiables en France. Agrosol 15(1) : 23-29.
Claude, P-P et M. Giroux. 2006. Effet des engrais organo-minérux inoculés (EOMI) sur la croissance des plants de maïs-grain, les rendements, les prélèvements des éléments nutritifs et la qualité des grains. (A paraître dans le numéro d'Agrosol - juin 2006).
Crawford, N.M. et A.D.M. Glass. 1998. Molecular and physiological aspects of nitrate uptake in plants. Trends in Plant Sci. 3(10) : 389-401.
Flowers, M., R.Weisz, R. Heiniger, D. Osmond et C. Crozier. 2004. In-season optimization and site-specific nitrogen management for soft-red winter wheat. Agron. J. 96 :124-134.
Gambin, B.L., L. Borras et M.E. Otegui. 2006. Source-sink relatins and kernal weight differences in maize temperate hybrids. Field Crop Res. 95:316-326.
Hodge, A., D. Robinson et A. Fitter. 2000. Are microorganisms more effective than plants at competing for nitrogen ? Trends in Plant Sci. 5(7) : 304-318.
Hilali, A., D. Prévost, W.J. Broughton et H. Antoun. 2001. Effet de l'inoculation avec des souches de Rhizobium leguminosarum biovar trifolii sur la croissance du blé dans deux sols du Maroc. Can. J. Microbiol. 47: 590-593.
Jackson, L.E., J.P. Schimel et M.K. Firestone. 1989. Short-term partitioning of ammonium and nitrate between plants and microbes in an annual grassland. Soil Biol. Biochem. 21(3) : 409-415.
Jingguo, W. et L.R. Bakken. 1997. Competition for nitrogen during decompostion of plant residues in soil : effect of spatial placement of N-rich and N-poor plant residues. Soil Biol. Biochem. 29(2) : 153-162.
Lawlor, D.W. 2002. Carbon and nitrogen assimilation in relation to yield: mechanisms are the key to understanding production systems. J. Exp. Bot. 53:773-787.
Martre, P., J.R. Porter, P.D. Jamieson et E. Triboï. 2003. Modeling grain nitrogen accumulation and protein composition to understand the sink/source regulations of nitrogen remobilization for wheat. Plant Physiol. 133:1959-1967.
Mirleau, P., S. Delorme, L. Philippot, J.M. Meyer, S. Mazurier et P. Lemanceau. 2000. Fitness in soil and rhizosphere of Pseudomonas fluorescens C7R12 compared with a mutant affected in pyoverdine synthesis and uptake. FEMS Microbio. Ecol. 34 : 35-44.
Moritsuka, N., J. Yanai, K. Mori et T. Kosaki. 2004. Biotic and abiotic processes of nitrogen immobilization in the soil-residue interface. Soil Biol. Biochem. 36:1141-1148.
Noquet, C., J-Ch. Avice, L. Rossato, P. Beauclair, M-P. Henry et A. Ourry. 2004. Effects of altered source-sink relationships on N allocation and vegetatvie storage protein accumulation in Brassica napus L. Plant Sci. 166:1007-1018.
Singh, Y., B. Singh, J.K. Ladha, C.S. Khind, T.S. Khera et C.S. Bueno. 2004. Effects of residue décomposition on productivity and soil fertility in rice-wheat rotations. Soil Sci. Soc. Am. J. 68:854-864.
Wiren, N. von, S. Gazzarrini, A. Gojon et W.B. Frommer. 2000. The molecular physiology of ammonium uptake and retrieval. Curr. Opinion Plant Biol. 3 : 254-261.
Woolfolk, C.W., W.R. Raun, G.V. Johnson, W.E. Thomason, R.W. Mullen, K.J. Wynn et K.W. Freeman. 2002. Influence of late-seaon foliar nitrogen applications on yield and grain nitrogen in winter wheat. Agron. J. 94 :429-434.
Zadoks, J.C., T.T. Chang et C.F. Konzak. 1974. A decimal code for growth stage of cereals. Weed Res. 14:415-421.

## Revendications

1. Utilisation d'agents azoto-nutritionnel (ANN) pour la fertilisation des grandes cultures non - légumineuses cultivées en présence de résidus de culture pailleux au sol et incorporables au sol et pouvant provoquer l'immobilisation microbienne de l'azote minéral.

2. Utilisation d'agents azoto-nutritionnel (ANN) selon la revendication 1 **caractérisées en ce que** les grandes cultures non - légumineuses sont choisi parmi un group comprenant les cultures hivernales de blé, d'orge, de seigle, d'avoine et de colza.

3. Utilisation d'agents azoto-nutritionnel (ANN) selon une quelconque des revendications précédentes **caractérisées en ce** ces agents azoto - nutritionnel (ANN) sont capables de favoriser l'entrée de l'azote dans le cycle naturel de la synthèse protéique chez les plantes en stimulant l'activité enzymatiques, notamment celles de la glutamine synthétase (GS) et la nitrate réductase (NR).

4. Utilisation d'agents azoto-nutritionnel (ANN) selon la revendication 3 **caractérisée en ce que** les agents azoto - nutritionnel sont choisi parmi un group comprenant les ulvanes, le GABA, l'acide glutamique et certains de ses sels, l'hydrolysat de caséine, les acides acétique, citrique, glycolique, aspartiques, la proline, et leurs dérivés et/ou un mélange de ceux-ci.

5. Utilisation d'agents azoto-nutritionnel (ANN) selon une quelconque des revendications précédentes **caractérisées en ce qu'**ils sont appliquées au feuillage pendant la période de croissance végétative de la culture et avant la phase de remplissage accéléré des grains ;
- soit du stade Zadoks 30 à 39, et de préférence en sortie d'hiver conjointement à une application de solution d'azote fertilisante
- soit du stade Zadoks 39 à 55, et de préférence en combinaison avec un traitement phytosanitaire appliqué au feuillage.

6. Utilisation d'agents azoto-nutritionnel (ANN) selon une quelconque des revendications précédentes **caractérisées en ce que** les résidus de cultures pailleux au sol sont en quantité et de nature à provoquer l'immobilisation microbienne de l'azote et du phosphore une fois incorporés au sol, soit avantageusement avec un rapport carbone / azote d'au moins 25 et en quantité supérieure à 7 tonnes par hectare.

7. Utilisation d'agents azoto-nutritionnel (ANN) selon la revendication 6 **caractérisées en ce que** les résidus de cultures pailleux au sol sont bactérisés à l'aide de bactéries favorisant la croissance des plantes (BFCP), phytogènes et particulièrement bien adaptées à la vie dans les sols.

8. Utilisation d'agents azoto-nutritionnel (ANN) selon la revendication 7 **caractérisées en ce que** les BFCP sont choisi parmi celles étant les mieux adaptées à la vie dans les sols arables.

9. Utilisation d'agents azoto-nutritionnel (ANN) selon les revendications 7 et 8 **caractérisées en ce que** les BFCP sont plus phytogènes que l'ensemble des souches témoins.

10. Agents azoto-nutritionnels (ANN) pour la (bio)fertilisation des grandes cultures non - légumineuses d'hiver qu'en présence de résidus pailleux de culture au sol, avantageusement bactérisés à l'aide de BFCP phytogènes.
